# EUROPÄISCHE PATENTSCHRIFT

(11) **EP 3 149 349 B1**
(45) Veröffentlichungstag und Bekanntmachung des Hinweises auf die Patenterteilung: **28.03.2018**
(21) Anmeldenummer: 15721555.9
(22) Anmeldetag: 31.03.2015
(51) Int. Cl.: F16C 41/00, F16C 19/06

(54) **LAGERANORDNUNG UND ZUGEHÖRIGES HERSTELLUNGSVERFAHREN**
BEARING ARRANGEMENT AND CORRESPONDING PRODUCTION PROCESS
AGENCEMENT DE PALIER ET PROCÉDÉ DE FABRICATION ASSOCIÉ

(30) Priorität: 28.05.2014 DE 102014210201
(43) Veröffentlichungstag der Anmeldung: 05.04.2017
(73) Patentinhaber: Schaeffler Technologies AG & Co. KG, 91074 Herzogenaurach (DE)
(72) Erfinder: GLÜCK, Stefan, 97424 Schweinfurt (DE)
(86) Internationale Anmeldenummer: PCT/DE2015/200241
(87) Internationale Veröffentlichungsnummer: WO 2015/180715

(56) Entgegenhaltungen:
- EP-A2- 2 639 720
- DE-A1- 19 740 502
- DE-A1-102012 016 309
- DE-T2-602006 000 341

## Beschreibung

Die Erfindung betrifft eine Lageranordnung, umfassend ein Wälz- oder Gleitlager mit einem Innenring und einem Außenring und wenigstens ein am Innenring oder am Außenring angeordnetes Anbauteil.

### Hintergrund der Erfindung

Für verschiedene Anwendungen ist es erforderlich, ein Lager mit einem Anbauteil zu versehen. Das Anbauteil kann z. B. ein Gehäuse für die Aufnahme eines Sensors oder für Elektronikbauteile sein.

Herkömmliche Lageranordnungen dieser Art, die auch als Sensorlager bezeichnet werden, sind zumeist so aufgebaut, dass ein Anbauteil an das Lager angeklebt ist oder dass ein Spritzgussteil in eine Dichtungsnut an einem der Ringe eingeclipst ist. Allerdings müssen derartige Anbauteile spezifisch für einen bestimmten Lagertyp hergestellt werden, da sich Lagerdurchmesser, Geometrie der Dichtungsnut und andere Maße unterscheiden. Dadurch ergeben sich hohe Werkzeugkosten für Tiefziehwerkzeuge und/oder Spritzgusswerkzeuge, so dass Anbauteile nur bei höheren Stückzahlen wirtschaftlich hergestellt werden können. Dementsprechend ist die Typenvielfalt sensorisierter Lager sehr eingeschränkt.

DE 60 2006 000 341 T2 offenbart beispielsweise einen fertig hergestellten Sensor bzw. Sensorblock. Dieser wird an ein Lager angeordnet und anschließend im Bereich der Ringnuten mittels Einspritzens eines aushärtbaren Werkstoffs in dafür vorgesehene Bereiche mit dem Lager formschlüssig verbunden.

### Beschreibung der Erfindung

Es wäre daher wünschenswert, eine Lageranordnung zur Verfügung zu stellen, die auch bei kleinen Stückzahlen wirtschaftlich ist.

Der Erfindung liegt daher die Aufgabe zugrunde, eine Lageranordnung mit einem Anbauteil anzugeben, die auch bei kleinen Stückzahlen wirtschaftlich herstellbar ist.

Zur Lösung dieser Aufgabe ist bei einer Lageranordnung der eingangs genannten Art erfindungsgemäß vorgesehen, dass das Anbauteil aus einem schmelzbaren oder aushärtbaren Material besteht, das durch ein generatives Fertigungsverfahren formschlüssig an dem Innenring oder dem Außenring angebracht ist.

Die Erfindung beruht auf der Idee, kleine Stückzahlen eines Anbauteils durch ein Verfahren herzustellen, das üblicherweise im Rahmen von Rapid Prototyping benutzt wird. Ein bloßes Ersetzen von spritzgegossenen oder tiefgezogenen Anbauteilen durch Anbauteile, die durch ein Rapid Prototyping Verfahren hergestellt worden sind, ist aufgrund der begrenzten Toleranzen sehr schwierig. Insbesondere ist die Ausbildung von Schnappkonturen problematisch, so dass ein herkömmliches Rapid Prototyping Verfahren nicht serientauglich ist.

Das schmelzbare oder aushärtbare Material ist vorzugsweise ein Kunststoffmaterial, das durch ein generatives Fertigungsverfahren verarbeitet werden kann. Beispiele für ein derartiges Material, das zur Herstellung der erfindungsgemäßen Lageranordnung eingesetzt werden kann, ist ein UV-härtbarer Kunststoff, das heißt ein Material, das durch Bestrahlen mit ultraviolettem Licht vernetzt und ausgehärtet werden kann. Das schmelzbare oder aushärtbare Material kann z. B. in einem Schmelzauftragverfahren eingesetzt werden. Dazu wird es über seine Schmelztemperatur erwärmt und durch eine geeignete Apparatur aufgetragen. Als weiteres generatives Fertigungsverfahren kann auch ein Auftragsschweißverfahren eingesetzt werden, bei dem das aufgetragene Material mittels eines Lasers geschmolzen wird. Das aufgetragene Material kann als Draht oder Filament bereitgestellt und mittels einer Auftragsvorrichtung auf den Innenring oder den Außenring aufgetragen werden. Grundsätzlich kommt als Material, das in dem generativen Fertigungsverfahren eingesetzt werden kann, auch ein metallisches Material in Frage, das z. B. mit weiteren Komponenten eine Paste bildet, die mittels einer entsprechenden Apparatur auf einen Innenring oder einen Außenring aufgetragen und anschließend durch Bestrahlen mit einem Strahlwerkzeug (Laser) ausgehärtet werden kann. Um bestimmte mechanische oder elektrische Eigenschaften des Anbauteils zu erzeugen kann es auch vorgesehen sein, dass das schmelzbare oder aushärtbare Material aus einem Kunststoffmaterial und einem metallischen Werkstoff zusammengesetzt ist.

Die Erfindung überwindet dieses Problem, indem das Anbauteil durch ein generatives Fertigungsverfahren wie ein Schmelzauftragverfahren formschlüssig an dem Innenring oder dem Außenring angebracht wird. Dadurch ist das Anbauteil mit dem Wälz- oder Gleitlager durch einen Formschluss anstelle eines Kraftschlusses verbunden. Somit werden Probleme umgangen, die durch eine sehr toleranzabhängige Schnappkontur entstehen, die auf herkömmliche Weise, beispielsweise im Spritzgussverfahren, hergestellt ist. Erfindungsgemäß ist hingegen vorgesehen, das Anbauteil mit einem entsprechend angepassten Drucker, insbesondere mit einem sogenannten 3D-Drucker, direkt an das Wälz- oder Gleitlager anzudrucken.

Bei der erfindungsgemäßen Lageranordnung ist das Anbauteil durch schichtweises Auftragen mehrerer Schichten des schmelzbaren oder aushärtbaren Materials hergestellt. Auf diese Weise kann ein dreidimensionales Anbauteil schichtweise aufgebaut werden. Nach dem Erhärten einer aufgetragenen Schicht kann darauf die nächste Schicht aufgebracht werden.

Es liegt auch im Rahmen der Erfindung, dass das Anbauteil ein Objekt ein- oder mehrseitig umgibt oder dass das Objekt im Inneren des Anbauteils integriert ist. Dazu wird das Schmelzauftragverfahren zu einem geeigneten Zeitpunkt, nachdem eine Aufnahmestruktur für das Objekt bereits gedruckt worden ist, unterbrochen, das Objekt wird eingesetzt und anschließend wird das Anbauteil mit dem eingesetzten Objekt durch Fortsetzen des Druckvorgangs fertiggestellt, so dass das Objekt vorzugsweise allseitig von dem schmelzbaren oder aushärtbaren Kunststoffmaterial umgeben ist oder dass es im Inneren des Anbauteils integriert ist.

Das in das Anbauteil eingebettete Objekt kann beispielsweise ein Sensor sein, eine Sensorkomponente, ein elektronisches Bauteil oder eine elektronische Schaltung. Zusätzlich können entsprechende Leitungen zur Datenübertragung und Stromversorgung, sowie Sensorleitungen und Steuerleitungen usw. integriert werden.

Eine besonders zweckmäßige Weiterbildung der Erfindung ergibt sich, wenn bei der erfindungsgemäßen Lageranordnung der Innenring oder der Außenring eine Hinterschneidung aufweist, in die das schmelzbare oder aushärtbare Kunststoffmaterial eingebracht ist. Die Hinterschneidung kann beispielsweise als Nut ausgebildet sein, insbesondere als Dichtungsnut, so dass beim Einbringen des geschmolzenen Kunststoffmaterials in diese Nut oder Hinterschneidung ein Formschluss entsteht, der einen sicheren Halt des Anbauteils an dem Wälz- oder Gleitlager gewährleistet.

Bei der erfindungsgemäßen Lageranordnung ist es auch möglich, Leiterbahnen herzustellen, indem dafür ein modifiziertes schmelzbares oder aushärtbares Kunststoffmaterial verwendet wird, das elektrisch leitfähig ist. Dazu kann das Kunststoffmaterial beispielsweise mit Graphit gefüllt werden. Die übrigen Bereiche des Anbauteils werden mit einem anderen Kunststoffmaterial hergestellt, das elektrisch isolierend ist.

Daneben betrifft die Erfindung ein Verfahren zur Herstellung einer Lageranordnung, umfassend ein Wälz- oder Gleitlager mit einem Innenring und einem Außenring und wenigstens ein am Innenring oder am Außenring angeordnetes Anbauteil. Das erfindungsgemäße Verfahren zeichnet sich dadurch aus, dass das Anbauteil aus einem schmelzbaren oder aushärtbaren Material hergestellt wird, das durch ein generatives Fertigungsverfahren formschlüssig an dem Innenring oder dem Außenring angebracht wird, und dass das Anbauteil durch das generatives Fertigungsverfahren in mehreren Schichten gebildet wird. Vorzugsweise ist das Material ein Kunststoffmaterial. Das generative Fertigungsverfahren ist vorzugsweise ein Schmelzauftragverfahren.

Bei dem erfindungsgemäßen Verfahren wird es bevorzugt, dass nach dem Aufbringen eines Teils des schmelzbaren oder aushärtbaren Kunststoffmaterials ein Objekt darauf angeordnet und/oder daran befestigt und anschließend ein weiterer Teil des schmelzbaren oder aushärtbaren Kunststoffmaterials aufgebracht wird, der das Objekt wenigstens teilweise umgibt.

Um die Herstellung der Lageranordnung zu vereinfachen, kann es bei dem erfindungsgemäßen Verfahren vorgesehen sein, dass das Wälz- oder Gleitlager in einer um mehrere Achsen schwenk- und/oder drehbaren Halterung fixiert wird, deren Position während des Aufbringens des schmelzbaren oder aushärtbaren Kunststoffmaterial wenigstens einmal geändert wird. Bei dem Schmelzauftragverfahren wird das geschmolzene Kunststoffmaterial üblicherweise aus einer Düse extrudiert, die senkrecht angeordnet ist, so dass das Kunststoffmaterial die Düse vertikal nach unten verlässt. Mittels der Halterung kann die Lageranordnung und insbesondere die Stelle, an der das geschmolzene Kunststoffmaterial appliziert werden soll, in eine passende Position gebracht werden. Im Rahmen dieses Herstellungsverfahrens wird die Position der Halterung mit dem daran befestigten Wälz- oder Gleitlager einmal oder mehrmals geändert. Dementsprechend werden bei dem erfindungsgemäßen Verfahren vorzugsweise wenigstens zwei Schichten des schmelzbaren Kunststoffmaterials mit unterschiedlichen Auftragsrichtungen aufgebracht.

### Kurze Beschreibung der Zeichnungen

Die Erfindung wird nachfolgend anhand eines Ausführungsbeispiels unter Bezugnahme auf die Zeichnungen erläutert. Die Zeichnungen sind schematische Darstellungen und zeigen:
- Figur 1: eine geschnittene Seitenansicht einer erfindungsgemäßen Lageranordnung;
- Figur 2: eine Halterung, die zur Herstellung der erfindungsgemäßen Lageranordnung eingesetzt wird;
- Figur 3: ein Detail von Figur 2 im Bereich eines Druckkopfes;
- Figur 4: ein Detail eines Anbauteils;
- Figur 5: einen Lagerring während der Herstellung des Anbauteils;
- Figur 6: den in Figur 5 gezeigten Lagerring in einer anderen Position;
- Figur 7: eine geschnittene Ansicht eines weiteren Ausführungsbeispiels einer erfindungsgemäßen Lageranordnung;
- Figur 8: ein Detail eines Lagerrings mit aufgebrachten Anbauteil; und

- Figur 9: ein ähnliches Ausführungsbeispiel wie das im Figur 8 gezeigte.

### Detaillierte Beschreibung der Zeichnungen

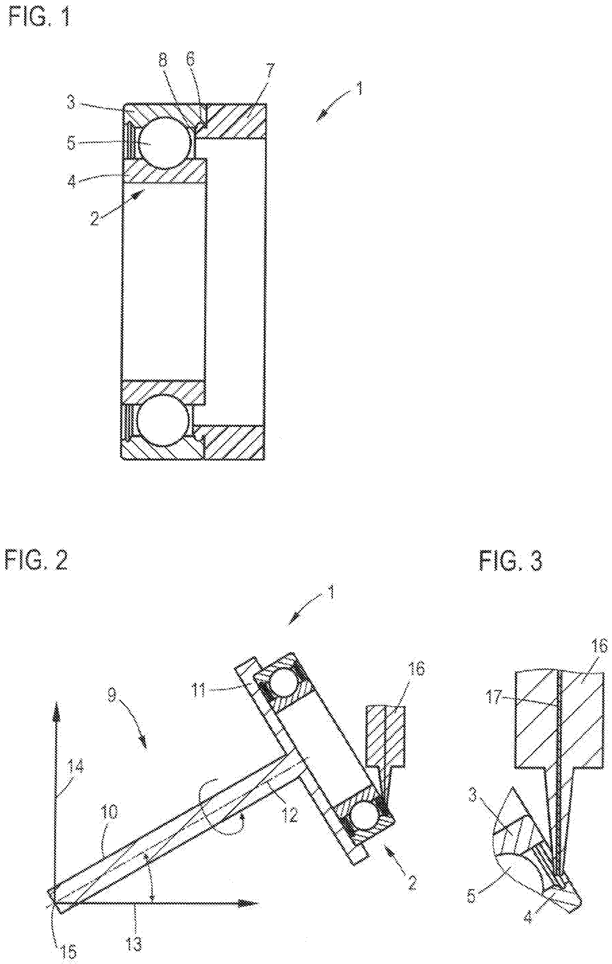

Figur 1 zeigt eine Lageranordnung 1, umfassend ein Wälzlager 2 mit einem Innenring 3 und einem Außenring 4, zwischen denen als Kugeln 5 ausgebildete Wälzkörper aufgenommen sind. In der geschnittenen Ansicht von Figur 1 erkennt man, dass der Außenring 4 eine Dichtungsnut 6 aufweist, in der ein entsprechend gegengleich ausgebildeter Vorsprung 8 eines Anbauteils 7 angeordnet ist. Das Anbauteil 7 ist durch ein generatives Fertigungsverfahren, in dem dargestellten Ausführungsbeispiel durch ein Schmelzauftragverfahren, hergestellt. Durch die Herstellung wird das Anbauteil 7 formschlüssig mit dem Außenring 4 verbunden.

In dem Anbauteil 7 ist ein Objekt angeordnet, das in diesem Fall als Sensor ausgebildet ist. Der Sensor kann z. B. ein Drehzahlsensor sein, bei dem ein Impulsgeberring mit einem Magnet und einem Hall-IC zusammenwirkt, der Magnet und der Hall-IC können dazu in dem Anbauteil 7, das mit dem Außenring 4 verbunden ist, angeordnet sein, der Impulsgeberring (nicht gezeigt) kann mit dem Innenring 3 verbunden sein.

Figur 2 zeigt das Verfahren zur Herstellung der Lageranordnung 1. Das Wälzlager 2 wird dazu auf einer Halterung 9 befestigt, die einen drehbaren Zapfen 10 und eine an dem freien Ende des Zapfens 10 angeordnete Spannvorrichtung 11 aufweist, durch die das Wälzlager 2 gehalten wird. Die Halterung 9 ist um mehrere Achsen drehbar und schwenkbar, nämlich um ihre Längsachse, was durch das Bezugszeichen 12 dargestellt wird, zusätzlich ist sie entlang zweier orthogonaler Achsen 13, 14 verfahrbar, wobei die Achse 13 ein horizontale Achse und die Achse 14 eine vertikale Achse ist. Schließlich ist die Halterung 9 auch um eine zu den beiden Achsen 13, 14 orthogonale Achse 15 (z-Achse) drehbar, die sich in der Darstellung von Figur 2 vertikal aus der Zeichenebene erstreckt. Die Halterung 9 dient als Positioniervorrichtung, um das aufgespannte Wälzlager exakt unter einem Druckkopf 16 zu positionieren. Der Druckkopf 16 ist Bestandteil eines 3D-Druckers, mit dem ein Schmelzauftragverfahren durchgeführt werden kann. Dieses Verfahren wird auch als Fused Deposition Modeling (FDM) bezeichnet. Bei dem FDM-Verfahren wird ein Kunststofffilament aufgeschmolzen und mittels eines Extruders mit einer feinen Düse (Druckkopf 16) in Bahnen schichtweise aufeinandergelegt, um ein bestimmtes Bauteil, im vorliegenden Fall das Anbauteil 7, zu formen. Durch den Auftrag des geschmolzenen Kunststoffmaterials verschmelzen die einzelnen extrudierten Stränge und ergeben ein massives Kunststoffteil. Durch Positionieren der Halterung 9, d. h. durch Drehen und ein- oder mehrachsiges Verschieben wird das von der Halterung 9 gehaltene Wälzlager 2 exakt unter der Öffnung des feststehenden Druckkopfes 16 positioniert. Da das geschmolzene Kunststoffmaterial an der Unterseite des ortsfesten Druckkopfes 16 austritt, ist es erforderlich, das zu bedruckende Werkstück entsprechend zu positionieren und nachzuführen.

Figur 3 zeigt den Druckkopf 16 in einem vergrößerten Maßstab. Der Druckkopf 16 weist eine Bohrung 17 auf, durch die das geschmolzene Kunststoffmaterial strömt, bis es am Ende des Druckkopfes 16 austritt. In Figur 3 erkennt man, dass das Wälzlager 2, genauer gesagt dessen Außenring 4, so unter dem Druckkopf 16 positioniert worden ist, dass das austretende Kunststoffmaterial in die Dichtungsnut 6 eingebracht werden kann. Durch entsprechendes Drehen und gegebenenfalls Verschieben des Wälzlagers 2 kann die Dichtungsnut 6 in einem Arbeitsgang mit dem schmelzbaren Kunststoffmaterial ausgefüllt werden. Durch das Einbringen des Kunststoffmaterials in die Dichtungsnut 6 entsteht ein Formschluss, anschließend kann eine weitere Schicht des Kunststoffmaterials auf das Kunststoffmaterial in der Dichtungsnut 6 aufgebracht werden. Auf diese Weise wird das Anbauteil 7 nach und nach in mehreren Schichten gebildet. Bei einer Ausführung kann sich das Anbauteil 7 um den gesamten Umfang erstrecken, so dass ein ringförmiges Anbauteil gebildet wird. Bei einer anderen Ausführung kann das Anbauteil lediglich über einen Teil der Umfangsrichtung erzeugt werden.

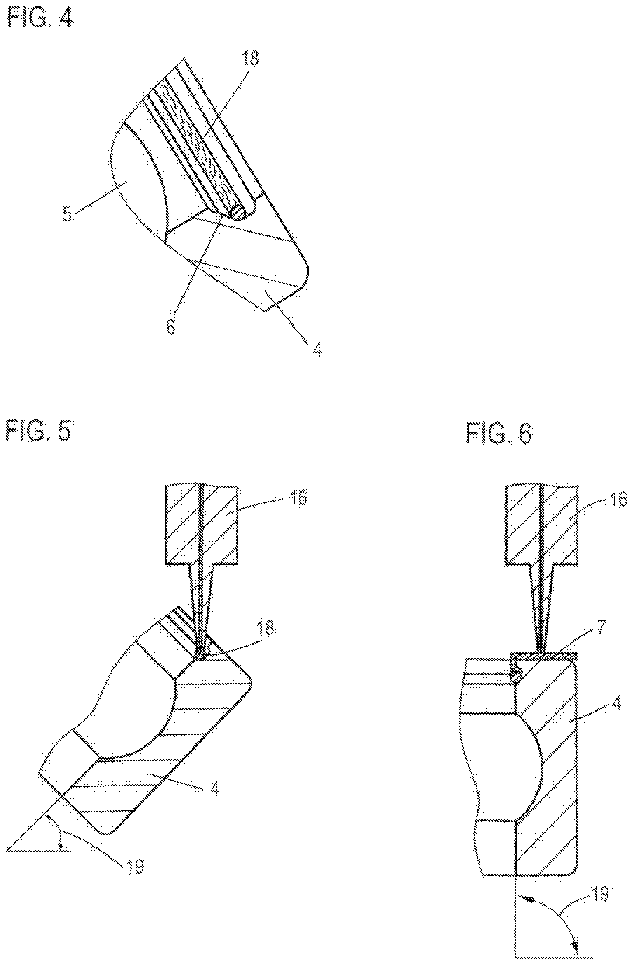

Figur 4 zeigt den Verfahrensschritt, wenn der Formschluss zwischen dem Wälzlager 2 und dem zu druckenden Anbauteil durch Eindrücken des schmelzbaren Kunststoffmaterials 18 in die eine Hinterschneidung aufweisende Dichtungsnut 6 hergestellt wird.

Figur 5 zeigt den Außenring 4 des Wälzlagers 2, der durch die Halterung 9 in die in Figur 5 gezeigte Position gebracht worden ist. In dieser Position kann das schmelzbare Kunststoffmaterial von dem Druckkopf 16 in die Dichtungsnut 6 abgegeben werden. In Figur 5 erkennt man, dass die Halterung 9 den Außenring 4 um einen Winkel 19 verkippt hat. Nachdem die Dichtungsnut 6 gefüllt wurde, wird wie in Figur 6 gezeigt der verbleibende Abschnitt des Anbauteils gedruckt. Dazu wird der Außenring 4 durch die Halterung 9 wieder in eine horizontale Position gedreht, wie in Figur 6 gezeigt ist. In dieser Stellung kann das Anbauteil 7 vervollständigt werden. Dazu wird das geschmolzene Kunststoffmaterial in mehreren Schichten aufgetragen. Die Halterung 9 bewegt die eingespannte Lageranordnung 1 dazu jeweils horizontal, um den zu bedruckenden Bereich unterhalb des Druckkopfes 16 zu positionieren.

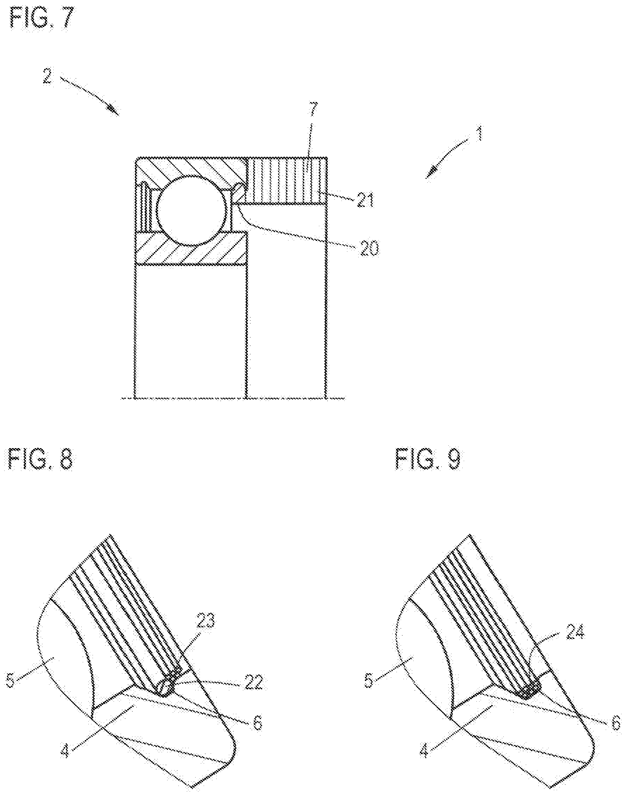

Figur 7 ist eine geschnittene Ansicht und zeigt die Lageranordnung 1 mit dem angedruckten Anbauteil 7, das formschlüssig in der Dichtungsnut 6 des Außenrings 4 angeordnet ist. Ein erster Absatz 20 des Anbauteils 7 wurde in einer ersten Position des Druckkopfes 16 gedruckt, wodurch sich eine spezielle erste Schichtungsrichtung ergeben hat. Ein zweiter Absatz 21 des Anbauteils 7 wurde in einer zweiten Schichtungsrichtung gedruckt, nachdem das Wälzlager 2 mittels der Halterung 9 in eine zweite, horizontale Position gedreht wurde. Durch Auftragen des geschmolzenen Kunststoffmaterials auf eine zuvor hergestellte Schicht verschmelzen die einzelnen extrudierten Stränge miteinander und ergeben das massive Anbauteil 7, bei dem wenigstens zwei Schichten unterschiedliche Auftragsrichtungen aufweisen.

Figur 8 ist eine ähnliche Darstellung wie Figur 4 und zeigt den Bereich der Dichtungsnut 6 des Außenrings 4 während der Herstellung des Anbauteils 7. Der erzeugte Formschluss wird in diesem Ausführungsbeispiel durch Überextrusion erzeugt, d. h. durch Drucken einer besonders dicken Spur 22 des schmelzbaren Kunststoffmaterials. Dabei wird das Kunststoffmaterial in die Dichtungsnut 6 gedrückt und gleicht eventuelle Toleranzen aus, ein Formschluss wird automatisch hergestellt. Falls erforderlich können auch mehrere besonders dicke Spuren nebeneinander und gegebenenfalls übereinander gedruckt werden. Anschließend werden feinere Schichten 23 des Kunststoffmaterials über oder neben die Spur 22 gedruckt, wodurch das Anbauteil 7 vervollständigt wird. Unterschiedliche dicke Spuren oder Schichten können durch eine entsprechende Steuerung des Druckkopfes 16 gedruckt werden, der beispielsweise eine Düse mit veränderlichem Durchmesser aufweisen kann. Alternativ kann die Schichtdicke auch durch die Vorschubgeschwindigkeit des zu bearbeitenden Werkstücks beeinflusst werden. Generell können auch weitere Parameter des Fertigungsverfahrens variiert werden, um ein bestimmtes Produkt bzw. bestimmte Eigenschaften zu erzeugen. Neben der bereits erwähnten Verstellung des Düsendurchmessers und einer Änderung des Werkstückvorschubs kann auch die Förderrate des Druckmediums, das heißt des Kunststoffmaterials, der Abstand zwischen dem Werkstück und dem Druckkopf oder die Druckkopftemperatur variiert bzw. angepasst werden. In der Praxis wird man einige oder alle der erwähnten Parameter überwachen und steuern oder regeln.

Figur 9 zeigt ein ähnliches Ausführungsbeispiel wie Figur 8 und stellt ein Detail der Lageranordnung 1 im Bereich der Dichtungsnut 6 dar. Anstelle einer besonders dicken Spur des geschmolzenen Kunststoffmaterials werden bei dem Ausführungsbeispiel von Figur 9 mehrere feine Schichten 24 axial nebeneinander in die Dichtungsnut 6 gedruckt, darauf wird eine zweite Schicht von mehreren nebeneinander angeordneten Streifen des Kunststoffmaterials aufgebracht. Auf diese Weise entstehen mehrere Schichten, wodurch das Anbauteil 7 gebildet wird.

Bei einer Abwandlung des Herstellungsverfahrens wird zunächst ein erster Teil des Anbauteils gedruckt, um die Dichtungsnut auszufüllen. Anschließend wird der Druckvorgang unterbrochen und ein Objekt wie ein Sensor oder eine Sensorkomponente wird auf das Kunststoffmaterial aufgebracht. Daraufhin wird der Druckvorgang fortgesetzt, bis das Anbauteil vollständig von Kunststoffmaterial umgeben ist. Zur Herstellung einer leitfähigen Verbindung kann auch ein schmelzbares Kunststoffmaterial verwendet werden, das elektrisch leitfähig ist. Dazu eignet sich mit Graphit versetztes Kunststoffmaterial. Auf diese Weise kann ein Objekt wie ein Sensor sicher und vor Umwelteinflüssen geschützt in ein Anbauteil integriert werden, zusätzlich können elektrische Anschlüsse vorgesehen werden.

Das beschriebene Verfahren zur Herstellung einer Lageranordnung weist den Vorteil auf, dass es auch bei kleinen Stückzahlen kostengünstig durchgeführt werden kann und eine sichere Verbindung eines Anbauteils an einem Lager gewährleistet.

### Bezugszeichenliste

1 Lageranordnung
2 Wälzlager
3 Innenring
4 Außenring
5 Kugel
6 Dichtungsnut
7 Anbauteil
8 Vorsprung
9 Halterung
10 Zapfen
11 Spannvorrichtung
12 Bezugszeichen
13 Achse
14 Achse
15 Achse
16 Druckkopf
17 Bohrung
18 Kunststoffmaterial
19 Winkel
20 Absatz
21 Absatz
22 Spur
23 Schicht
24 Schicht

## Patentansprüche

1. Lageranordnung (1), umfassend ein Wälz- oder Gleitlager (2) mit einem Innenring (3) und einem Außenring (4) und wenigstens ein am Innenring (3) oder am Außenring (4) angeordnetes Anbauteil (7), **dadurch gekennzeichnet, dass** das Anbauteil (7) aus einem schmelzbaren oder aushärtbaren Material besteht, das durch ein generatives Fertigungsverfahren formschlüssig an dem Innenring (3) oder dem Außenring (4) angebracht ist, und dass das Anbauteil (7) durch schichtweises Auftragen mehrerer Schichten des schmelzbaren oder aushärtbaren Materials hergestellt ist.

2. Lageranordnung nach Anspruch 1, **dadurch gekennzeichnet, dass** das Anbauteil (7) ein Objekt ein- oder mehrseitig umgibt oder dass das Objekt im Inneren des Anbauteils (7) integriert ist.

3. Lageranordnung nach Anspruch 2, **dadurch gekennzeichnet, dass** das Objekt als Sensor oder Sensorkomponente oder elektronisches Bauteil oder elektronische Schaltung ausgebildet ist.

4. Lageranordnung nach einem der vorangehenden Ansprüche, **dadurch gekennzeichnet, dass** der Innenring (3) oder der Außenring (4) eine Hinterschneidung aufweist, in die das Material eingebracht ist.

5. Verfahren zur Herstellung einer Lageranordnung (1), umfassend ein Wälz- oder Gleitlager (2) mit einem Innenring (3) und einem Außenring (4) und wenigstens ein am Innenring (3) oder am Außenring (4) angeordnetes Anbauteil (7), **dadurch gekennzeichnet, dass** das Anbauteil (7) aus einem schmelzbaren oder aushärtbaren Material hergestellt wird, das durch ein generatives Fertigungsverfahren formschlüssig an dem Innenring (3) oder dem Außenring (4) angebracht wird, und dass das Anbauteil (7) durch das generatives Fertigungsverfahren in mehreren Schichten gebildet wird.

6. Verfahren nach Anspruch 5, **dadurch gekennzeichnet, dass** nach dem Aufbringen eines Teils des schmelzbaren oder aushärtbaren Materials ein Objekt darauf angeordnet oder daran befestigt und anschließend ein weiterer Teil des Materials aufgebracht wird, der das Objekt wenigstens teilweise umgibt.

7. Verfahren nach Anspruch 5 oder 6, **dadurch gekennzeichnet, dass** ein elektrisch leitfähiges schmelzbares Kunststoff- und/oder Metallmaterial zum Erzeugen einer Leiterbahn verwendet wird.

8. Verfahren nach einem der Ansprüche 5 bis 7, **dadurch gekennzeichnet, dass** das Wälz- oder Gleitlager (2) in einer um mehrere Achsen schwenk- und/oder drehbaren Halterung (9) fixiert wird, deren Position während des Aufbringens des Materials wenigstens einmal geändert wird.

9. Verfahren nach einem der Ansprüche 5 bis 8, **dadurch gekennzeichnet, dass** das schmelzbare oder aushärtbare Material in wenigstens zwei Schichten mit unterschiedlichen Auftragsrichtungen aufgebracht wird.

## Claims

1. Bearing arrangement (1), comprising a rolling or sliding bearing (2) with an inner ring (3) and an outer ring (4) and at least one add-on part (7) arranged on the inner ring (3) or on the outer ring (4), **characterized in that** the add-on part (7) consists of a meltable or curable material which is attached to the inner ring (3) or the outer ring (4) with a positive fit by a generative production process, and **in that** the add-on part (7) has been produced by layer-by-layer deposition of multiple layers of the meltable or curable material.

2. Bearing arrangement according to Claim 1, **characterized in that** the add-on part (7) surrounds an object on one or more sides or **in that** the object is integrated in the interior of the add-on part (7).

3. Bearing arrangement according to Claim 2, **characterized in that** the object is formed as a sensor or sensor component or an electronic component or electronic circuit.

4. Bearing arrangement according to one of the preceding claims, **characterized in that** the inner ring (3) or the outer ring (4) has an undercut in which the material is incorporated.

5. Method for producing a bearing arrangement (1), comprising a rolling or sliding bearing (2) with an inner ring (3) and an outer ring (4) and at least one add-on part (7) arranged on the inner ring (3) or on the outer ring (4), **characterized in that** the add-on part (7) is produced from a meltable or curable material which is attached to the inner ring (3) or the outer ring (4) with a positive fit by a generative production process, and **in that** the add-on part (7) is produced in multiple layers by the generative production process.

6. Method according to Claim 5, **characterized in that**, after the depositing of part of the meltable or curable material, an object is arranged or mounted on top and then another part of the material, which at least partially surrounds the object, is deposited.

7. Method according to Claim 5 or 6, **characterized in that** an electrically conductive meltable plastics and/or metal material is used for generating a conductor track.

8. Method according to one of Claims 5 to 7, **characterized in that** the rolling or sliding bearing (2) is fixed in a holder (9) that is pivotable and/or rotatable about multiple axes and the position of which is changed at least once during the deposition of the material.

9. Method according to one of Claims 5 to 8, **characterized in that** the meltable or curable material is deposited in at least two layers with different directions of deposition.

## Revendications

1. Agencement de palier (1), comprenant un palier à roulement ou un palier lisse (2) avec une bague intérieure (3) et une bague extérieure (4) et au moins une pièce rapportée (7) agencée sur la bague intérieure (3) ou sur la bague extérieure (4), **caractérisé en ce que** la pièce rapportée (7) est constituée d'un matériau fusible ou durcissable, qui est déposé par un procédé de fabrication additive par emboîtement sur la bague intérieure (3) ou sur la bague extérieure (4), et **en ce que** la pièce rapportée (7) est fabriquée par le dépôt successif de plusieurs couches du matériau fusible ou durcissable.

2. Agencement de palier selon la revendication 1, **caractérisé en ce que** la pièce rapportée (7) entoure un objet sur un ou plusieurs côté(s) ou **en ce que** l'objet est intégré à l'intérieur de la pièce rapportée (7).

3. Agencement de palier selon la revendication 2, **caractérisé en ce que** l'objet est réalisé sous la forme d'un capteur ou d'un composant de capteur ou d'un composant électronique ou d'un circuit électronique.

4. Agencement de palier selon l'une quelconque des revendications précédentes, **caractérisé en ce que** la bague intérieure (3) ou la bague extérieure (4) présente un dégagement, dans lequel le matériau est inséré.

5. Procédé de fabrication d'un agencement de palier (1), comprenant un palier à roulement ou un palier lisse (2) avec une bague intérieure (3) et une bague extérieure (4) et au moins une pièce rapportée (7) agencée sur la bague intérieure (3) ou sur la bague extérieure (4), **caractérisé en ce que** l'on fabrique la pièce rapportée (7) en un matériau fusible ou durcissable, que l'on dépose par un procédé de fabrication additive par emboîtement sur la bague intérieure (3) ou sur la bague extérieure (4), et **en ce que** l'on forme la pièce rapportée (7) par le procédé de fabrication additive en plusieurs couches.

6. Procédé selon la revendication 5, **caractérisé en ce qu'**après le dépôt d'une partie du matériau fusible ou durcissable on agence un objet sur celui-ci ou le fixe à celui-ci et on dépose ensuite une autre partie du matériau, qui entoure au moins partiellement l'objet.

7. Procédé selon la revendication 5 ou 6, **caractérisé en ce que** l'on utilise un matériau de matière plastique et/ou de métal fusible électriquement conducteur pour la production d'une piste conductrice.

8. Procédé selon l'une quelconque des revendications 5 à 7, **caractérisé en ce que** l'on fixe le palier à roulement ou le palier lisse (2) dans un support (9) pouvant pivoter et/ou tourner autour de plusieurs axes, et dont on change la position au moins une fois pendant le dépôt du matériau.

9. Procédé selon l'une quelconque des revendications 5 à 8, **caractérisé en ce que** l'on dépose le matériau fusible ou durcissable en au moins deux couches avec des directions de dépôt différentes.
